# EUROPÄISCHE PATENTSCHRIFT

(11) **EP 2 173 537 B1**
(45) Veröffentlichungstag und Bekanntmachung des Hinweises auf die Patenterteilung: **13.07.2011**
(21) Anmeldenummer: 09749537.8
(22) Anmeldetag: 30.04.2009
(51) Int. Cl.: B29C 67/00

(54) **VERFAHREN UND VORRICHTUNG ZUM SCHICHTWEISEN HERSTELLEN EINES DREIDIMENSIONALEN OBJEKTS AUS EINEM PULVERFÖRMIGEN MATERIAL**
METHOD AND DEVICE FOR THE LAYERED PRODUCTION OF A THREE-DIMENSIONAL OBJECT FROM A POWDERY MATERIAL
PROCÉDÉ ET DISPOSITIF DE FABRICATION PAR COUCHES D'UN OBJET TRIDIMENSIONNEL À PARTIR D'UN MATÉRIAU PULVÉRULENT

(30) Priorität: 21.05.2008 DE 102008024465
(43) Veröffentlichungstag der Anmeldung: 14.04.2010
(73) Patentinhaber: EOS GmbH Electro Optical Systems, 82152 Krailling (DE)
(72) Erfinder: PFISTER, Andreas, 81475 München (DE); GERSCH, Mandy, 89073 Ulm (DE)
(74) Vertreter: Prüfer & Partner GbR European Patent Attorneys
(86) Internationale Anmeldenummer: PCT/EP2009/003133
(87) Internationale Veröffentlichungsnummer: WO 2009/141047

(56) Entgegenhaltungen:
- DE-A1- 10 105 504
- DE-T2- 60 303 275

## Beschreibung

Die Erfindung betrifft ein Verfahren und eine Vorrichtung zum schichtweisen Herstellen eines dreidimensionalen Objekts aus einem pulverförmigen Material. Insbesondere betrifft die Erfindung ein Verfahren des selektiven Lasersintems, nachfolgend kurz "Lasersinterverfahren" genannt, und eine Lasersintervorrichtung, mit dem bzw. mit der ein dreidimensionales Objekt aus einem Kunststoffpulver, vorzugsweise aus Polyamid, kostengünstig und umweltscheend hergestellt werden kann.

Ein Lasersinterverfahren und eine Lasersintervorrichtung nach dem Oberbegriff des Patentanspruchs 1 bzw. des Patentanspruchs 9 sind beispielsweise aus der DE 101 05 504 A1 bekannt. Bei dem Verfahren wird insbesondere ein Kunststoffpulver wie z.B. Polyamid verwendet. Besonders gut geeignet ist dabei ein Polyamid 12 mit einer Schmelztemperatur von 185-189°C, einer Schmelzenthalpie von 112±17 kJ/mol und einer Erstarrungstemperatur von 138-143°C, wie es in der EP 0 911 142 beschrieben wird. Das Pulver hat eine mittlere Korngröße von 50-150 µm.

Bei dem bekannten Verfahren wird für einen Bauprozess jeweils eine bestimmte Menge an Altpulver, d.h. Pulver, das als nichtgesintertes Pulver aus einem oder mehreren vorherigen Bauprozesses übrig bleibt, verwendet.

Durch den Aufenthalt in der Prozesskammer während der Herstellung des dreidimensionalen Objekts wird das nichtverfestigte Pulver thermisch und/oder thermooxidativ beschädigt und hat dadurch andere Materialeigenschaften und damit auch andere Verarbeitungsparameter als Neupulver. Daher kann es nur in bestimmten Anteilen dem Neupulver zugemischt werden ohne den Bauprozess und die Bauteilqualität zu gefährden. Die sogenannte Auffrischrate ist das Verhältnis von Neupulver zu Altpulver bei dem für einen Bauprozess einzusetzenden Pulver. Diese soll möglichst klein sein, da dann Kosten für Neupulver eingespart werden können.

In der DE 101 05 504 A1 wird vorgeschlagen, das Altpulver oder eine Mischung aus Altpulver und Neupulver vor dem Verfestigen durch Fluidisieren vorzubehandeln, um die Wirkung von alterungsbedingten Schäden zu reduzieren und damit mehr Altpulver beimischen zu können. Durch die Vorbehandlung mit Fluidisieren lassen sich jedoch nicht alle alterungsbedingten Schäden des Pulvers eliminieren. Insbesondere verursacht ein zu hoher Anteil an Altpulver eine unbefriedigende Oberflächenbeschaffenheit der äußeren Bauteilwände durch sogenannte Einfallstellen, die auch "sink marks" oder "orange peel" genannt werden.

Aus der WO 2005/097475 und aus der DE 10 2004 047876 A1 sind Lasersinterverfahrer und Lasersinterpulver bekannt, bei denen das Problem der Einfallstellen dadurch verringert wird, dass ein bestimmtes Material verwendet wird, welches eine erhöhte Stabilität im Lasersinterprozess hat und somit weniger alterungsbedingte Schäden aufweist, wenn es als Altpulver verwendet wird. Beispielsweise ist das Pulver gemäß der DE 10 2004 047876 A1 dadurch gekennzeichnet, dass es eine Mischung von disäure- und diamingeregeltem Polyamid und/oder Copolyamid aufweist. Der Benutzer ist aber dann darauf angewiesen, dieses spezielle Pulver zu verwenden, welches wiederum andere Eigenschaften als das gewohnte bisher verwendete Pulver hat und möglicherweise nicht allen Anforderungen gerecht wird.

Aus der DE 10 2006 023 484.7 ist es ferner bekannt, das Problem der Einfallstellen dadurch zu eliminieren, dass das pulverförmige Aufbaumaterial beim Aufbringen einer Schicht mechanisch verdichtet wird. Dies erfordert das Vorhandensein eines speziellen Beschichters.

Aus der US 2004/0138344 A1 ist es bekannt, den Schmelzpunkt und die Schmelzenthalpie von Polyamid durch Inkontaktbringen des Polyamids mit Wasser oder Wasserdampf zu erhöhen. So können bestimmte Polyamide für das Lasersintern geeignet gemacht werden.

Es ist Aufgabe der Erfindung, ein Verfahren und eine Vorrichtung zum Herstellen eines dreidimensionalen Objekts, insbesondere ein Lasersinterverfahren und eine Lasersintervorrichtung bereitzustellen, mit dem bzw. mit der die Auffrischrate verringert werden kann und somit die Kosten des Verfahrens reduziert sowie die Umweltverträglichkeit erhöht werden kann.

Die Aufgabe wird gelöst durch ein Verfahren nach Patentanspruch 1 und eine Vorrichtung nach Patentanspruch 9. Weiterbildungen der Erfindung sind in den Unteransprüchen angegeben.

Das Verfahren nach Anspruch 1 weist den Vorteil auf, dass herkömmliches Kunststoffpulver zum Lasersintem, wie z.B. das oben genannte, aus der EP 0 911 142 bekannte Polyamid 12, dessen Eigenschaften hinlänglich bekannt sind, verwendet werden können.

Das Verfahren kann auf herkömmlichen Kunststofflasersintermaschinen durchgeführt werde Die Behandlung des Altpulvers kann in einem separaten Behälter am Ort der Lasersintermaschine oder in einer zentralen Recyclingstelle vorgenommen werden. Somit sind keine aufwendigen Nachrüstungen von vorhandenen Maschinen erforderlich. Der separate Behälter zur Behandlung des Altpulvers kann auch als Zusatzvorrichtung zur bereits vorhandenen Lasersintermaschine verwendet werden.

Die Behandlung des Altpulvers ist kostengünstig und umweltverträglich, da keine besonderen Chemikalien zum Einsatz kommen. Somit kann mit dem erfindungsgemäßen Verfahren die Umweltverträglichkeit des Lasersinterverfahrens erhöht werden, indem kein oder nur noch wenig nicht mehr verwendbares Altpulver in den Abfall gelangt.

Die Behandlung des Altpulvers ist kostengünstiger als die Herstellung des Neupulvers und ist auch rentabel für kleinere Pulvermengen. Somit können die Kosten des Lasersinterverfahrens gesenkt werden.

Weitere Merkmale und Zweckmäßigkeiten der Erfindung ergeben sich aus der Beschreibung eines Ausführungsbeispiels anhand der nachfolgenden Figuren.
- Fig. 1: zeigt eine schematische Darstellung einer Ausführungsform der Erfindung am Beispiel einer Lasersintervorrichtung.
- Fig. 2: zeigt eine Testgeometrie für ein Bauteil, das lasergesintert werden soll.
- Fig. 3: zeigt ein lasergesintertes Bauteil, das aus 100% Altpulver hergestellt wurde.
- Fig. 4: zeigt ein lasergesintertes Bauteil, das keine Einfallsstellen mehr aufweist und nach dem erfindungsgemäßen Verfahren aus recyceltem Altpulver hergestellt wurde.

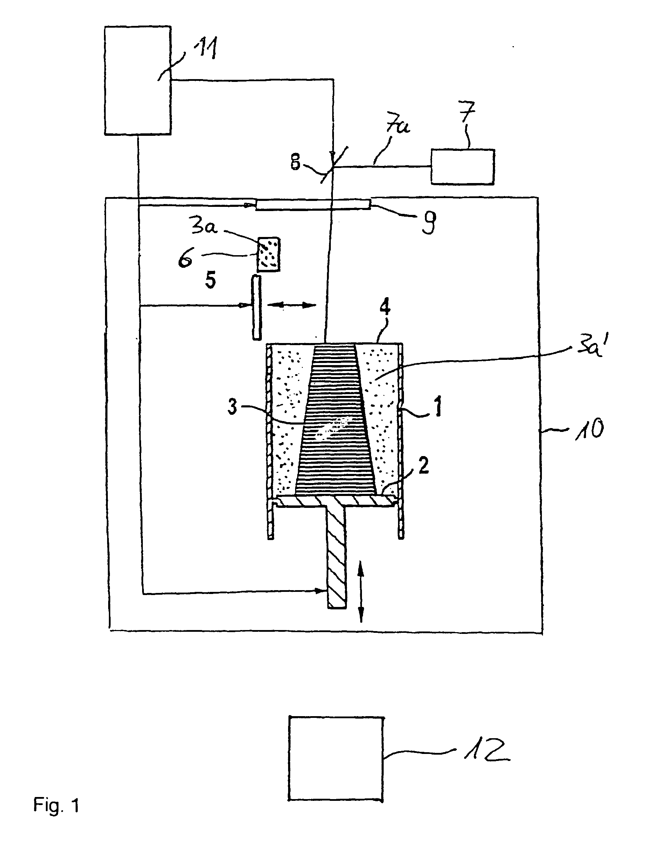

Die in Fig. 1 dargestellte Lasersintervorrichtung weist eine nach oben hin offenen Behälter 1 mit einem darin in vertikaler Richtung bewegbaren Träger 2 auf, der das zu bildende Objekt 3 trägt und ein Baufeld definiert. Der Träger 2 wird in vertikaler Richtung so eingestellt, dass die jeweils zu verfestigende Schicht des Objekts in einer Arbeitsebene 4 liegt. Weiterhin ist ein Beschichter 5 zum Aufbringen des durch elektromagnetische Strahlung verfestigbaren pulverförmigen Aufbaumaterials 3a vorgesehen. Dem Beschichter 5 wird das Aufbaumaterial 3a aus einem Vorratsbehälter 6 zugeführt. Die Vorrichtung weist ferner einen Laser 7 auf, der einen Laserstrahl 7a erzeugt, der durch eine Ablenkeinrichtung 8 auf ein Einkoppelfenster 9 gelenkt und von diesem in die Prozesskammer 10 hindurchgelassen und in einem vorbestimmten Punkt in der Arbeitsebene 4 fokussiert wird.

Es ist ferner eine Steuereinheit 11 vorgesehen, über die die Bestandteile der Vorrichtung in koordinierter Weise zum Durchführen des Bauprozesses gesteuert werden.

Außerhalb der Prozesskammer 10 ist eine Vorrichtung 12 zum Behandeln von nichtverfestigtem Altpulver vorgesehen. Diese Vorrichtung weist eine nicht dargestellte Wasserdampferzeugungseinrichtung, eine Heizeinrichtung zum Bringen des Wasserdampfs auf eine vorbestimmte Temperatur und eine Trocknungseinrichtung auf. Bei der Vorrichtung 12 zum Behandeln von Altpulver kann es sich beispielsweise um einen Autoklaven handeln. Die Trocknungseinrichtung kann beispielsweise ein Warmluftgebläse sein. Die Vorrichtung zum Behandeln von Altpulver umfasst ferner eine (nicht gezeigte) Steuerung zum Einstellen der Temperatur und der Dauer der Behandlung.

Die Vorrichtung 12 zum Behandeln von Altpulver kann optional mit der Prozesskammer und dem Vorratsbehälter über ein Fördersystem (nicht gezeigt) verbunden sein. Somit kann nicht verfestigtes Altpulver abgesaugt werden und nach der Behandlung dem Vorratsbehälter wieder zugeführt werden. Optional ist die Vorrichtung 12 zum Behandeln von Altpulver nur mit dem Vorratsbehälter verbunden, so dass Altpulver nach Entnehmen des Objekts mit dem umgebenden nichtverfestigten Material zugeführt wird. In einer weiteren Abwandlung kann die Vorrichtung 12 zum Behandeln von Altpulver auch in den Vorratsbehälter integriert sein.

Optional wird nach dem Job die Nachbehandlung des Altpulvers im offenen Behälter (1) mitsamt den Bauteilen durchgeführt. Dabei wird der komplette offene Behälter (Wechselrahmen) aus der Lasersintermaschine entnommen und in einer Vorrichtung 12 dem Nachbehandllungsprozeß unterzogen.

In einer weiteren Abwandlung ist die Vorrichtung 12 zum Behandeln von Altpulver an einem femliegenden Ort vorgesehen und das Altpulver kann dorthin transportiert werden sowie nach der Behandlung wieder zur Lasersintermaschine zurücktransportiert werden.

Nachfolgend wird das erfindungsgemäße Verfahren beschrieben. Als Pulver wird vorzugsweise ein Polyamid 12 verwendet, wie es in der EP 0 911 142 beschrieben ist. Das Pulver hat üblicherweise eine Korngröße zwischen etwa 50 µm und etwa 150 µm. Das Pulver kann Zusatzstoffe, wie Rieselhilfen, Farbpigmente, Füllstoffe, Flammschutzmittel oder weitere Zusatzstoffe enthalten.

Das Pulver 3a wird aus dem Vorratsbehälter 6 Schicht für Schicht auf den Träger bzw. eine zuvor verfestigte Schicht aufgetragen und mit dem Laser an in dem Querschnitt des Objekts entsprechenden Stellen in jeder Schicht verfestigt. Nach dem Herstellen des Objekts wird nichtversintertes, das Objekt umgebende Pulver 3a' der Vorrichtung 12 zum Behandeln von Altpulver zugeführt. Dort wird es für etwa 1 bis etwa 48 Stunden bei Temperaturen von mindestens 130°C und höchstens 10°C unterhalb des Schmelzpunktes des Pulvers mit Wasserdampf behandelt. Für ein Polyamid 12 und Polyamid 11 liegt die Behandlung vorzugsweise bei etwa 130°C bis etwa 170°C. Anschließend wird es im Trockenschrank, der Bestandteil der Vorrichtung 12 ist, getrocknet. Die Trocknungstemperatur liegt dabei geringer 100°C, vorzugsweise zwischen 50-70°C. Die Dauer und die Temperatur der Behandlung hängen davon ab, welches Alter das Altpulver bereits aufweist. Je älter das Pulver ist, ggf. wenn es schon einige Herstellungsverfahren zuvor verwendet wurde, desto länger muss es behandelt werden. Durch Erhöhung der Temperatur kann die Wiederherstellung beschleunigt werden. Die erforderliche Temperatur liegt jedoch unterhalb des Schmelzpunkts, um ein Zusammenbacken der Pulverkörner zu verhindern.

Durch das Altem beim Lasersinterprozess kommt es zu einem Molmassenaufbau des Polyamids durch Nachkondensation. Das der Vorrichtung 12 zugeführte Altpulver 3a' weist ein deutlich höheres Molekulargewicht auf als Neupulver. Je nach Alter und Temperaturbelastung steigt das Molekulargewicht des Altpulvers an. Bspw. weist ein erfindungsgemäßes Altpulver vor der Behandlung ein Molekulargewicht Mₙ (Zahlenmittel) von größer 20.000g/mol, vorzugsweise 21.000-100.000g/mol, besonders bevorzugt 22.000-50.000 und ganz besonders bevorzugt 25.000-35.000 und M_{w} (Gewichtsmittel) von größer 40.000g/mol, vorzugsweise 45.000-200.000 besonders bevorzugt 50.000-150.000 und ganz besonders bevorzugt 60.000-100.000 auf. Nach der Behandlung weist das recyclte Pulver ein Molekulargewicht auf, das um mindestens 5%, vorzugsweise 10-70% und besonders bevorzugt 20-50% unter dem des Altpulvers liegt. Das recyclte Pulver weist ein Mₙ (Zahlenmittel) von kleiner 40.000g/mol, vorzugsweise 15.000-30.000g/mol, besonders bevorzugt 17.000-25.000 und ganz besonders bevorzugt 19.000-21.000 und M_{w} (Gewichtsmittel) von kleiner 100.000g/mol, vorzugsweise 35.000-70.000 besonders bevorzugt 37.000-50.000 und ganz besonders bevorzugt 38.000-45.000 auf.

Durch das Altem beim Lasersinterprozess kann sich auch das Gleichgewicht zwischen den Carboxylendgruppen zu den Aminoendgruppen des Polyamid 12 in Richtung zu einem Überschuss einer der beiden Endgruppen, vorzugsweise der Carboxylendgruppe, verschieben. Das der Vorrichtung 12 zugeführte Altpulver 3a' weist vorzugsweise einen Überschuss einer Endgruppe, vorzugsweise der Carboxylendgruppe, von wenigstens 4:1 bis höchstens 200:1 auf. Je nach Alter des Pulvers kann der Überschuss 4:1, 5:1, etc., 100:1 bis 200:1 sein. Durch die Behandlung verringert sich vorzugsweise der Überschuß an

Endgruppen. Besonders bevorzugt stellt sich ein Überschuß der Endgruppen, vorzugsweise der Carboxylendgruppen, von etwa 2:1 bis 3:1 ein

In einem konkreten Ausführungsbeispiel wird ein Pulver verwendet, welches von der Firma EOS GmbH Electro Optical Systems unter dem Handelsnamen Primepart erhältlich ist und welches dem Pulver, das in der EP 0 911 142 beschrieben ist, entspricht sowie weitere Zusatzstoffe enthält. Ein noch nicht in einem Lasersinterprozess verwendetes Neupulver weist typischerweise folgende Parameter auf: Molmasse (Zahlenmittel) Mn = 19.600 g/mol, Molmasse (Gewichtsmittel) Mw = 42.500 (g/mol). Nach dem Sinterprozess hat das Altpulver folgende Parameter: Mn = 27.200 g/mol, Mw = 85.600 g/mol. Dieses Altpulver wird in der Behandlungsvorrichtung mit Heißdampf von 140°C unterschiedlich lange behandelt und anschließend getrocknet. Das behandelte Altpulver hat dann die in der Tabelle angegebenen Werte. Je nach Behandlungsdauer ist es möglich wieder das Molekulargewicht des Neupulvers einzustellen. Das ist unabhängig vom Molekulargewicht des Neupulvers bzw. des Altpulvers. Es ist daher auch unwesentlich, ob das Altpulver aus einem Kreislauf oder mehreren Kreisläufen stammt.

| Proben | Molmassenbestimmung (GPC) | |
|---|---|---|
| | Mn | Mw |
| Neupulver | 19500 | 42600 |
| Altpulver | 27200 | 85600 |
| 140°C, 1h | 25800 | 77100 |
| 140°C, 6h | 24500 | 70300 |
| 140°C, 12h | 20300 | 54000 |
| 140°C, 24h | 19100 | 48600 |

Die Werte wurden mittels Gelpermatationschromatographie (GPC) in Hexafluorisopropanol bestimmt. Die Bestimmung der Molmassen erfolgte rechnergestützt über die so genannte Streifenmethode. Dabei wird der eluierte Peak in mehrere äquidistante Volumenscheiben unterteilt, die mit der Messfrequenz identisch sind. Über die Kalibrierung werden dann die Elutionsvolumina in Molmassen transformiert.

Als Kalibrierstandard wurde engverteiltes Polymethylmethacrylate (PMMA), gelöst in HFIP, verwendet. Die genaue Durchführung und Auswertung sind dem Fachmann bekannt.

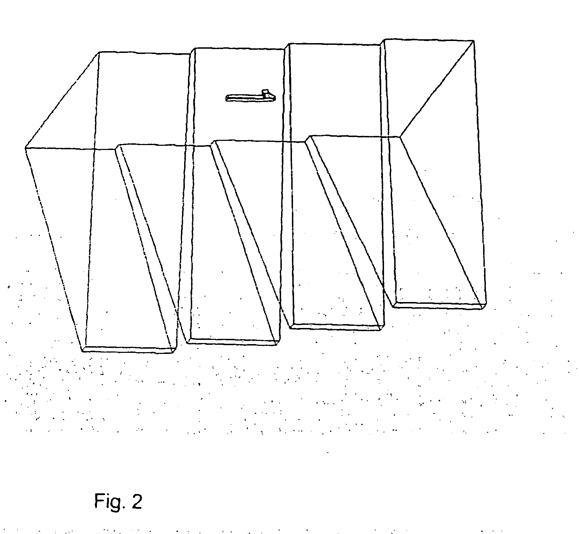

Das behandelte Pulver wird sodann für einen erneuten Lasersinterprozess eingesetzt. Die mit dem behandelten Primepart-Pulver hergestellten Lasersinter-Bauteile (Lasersintermaschine EOS P380, Parameter z.B. Mechanik, Compromise, Surface) weisen im Vergleich zum Altpulver und je nach Lage im Baufeld deutlich weniger bzw. keine Einfallstellen mehr auf. Die Überprüfung der Einfallstellenneigung kann mit einer relativ einfachen Keil-Testgeometrie, welche unterschiedlich geneigte Schrägen von mindestens 15-30°, vorzugsweise 0-50° enthalten, beim Lasersintern überprüft werden. Wobei 0° gleichzusetzen ist mit einer vertikalen Fläche in der z-Achse des Bauraums. Die Mindestmaße des Keils betragen 45 x 25 x 30mm (Länge x Breite x Höhe). Eine typische Testgeometrie ist in Fig.2 dargestellt.

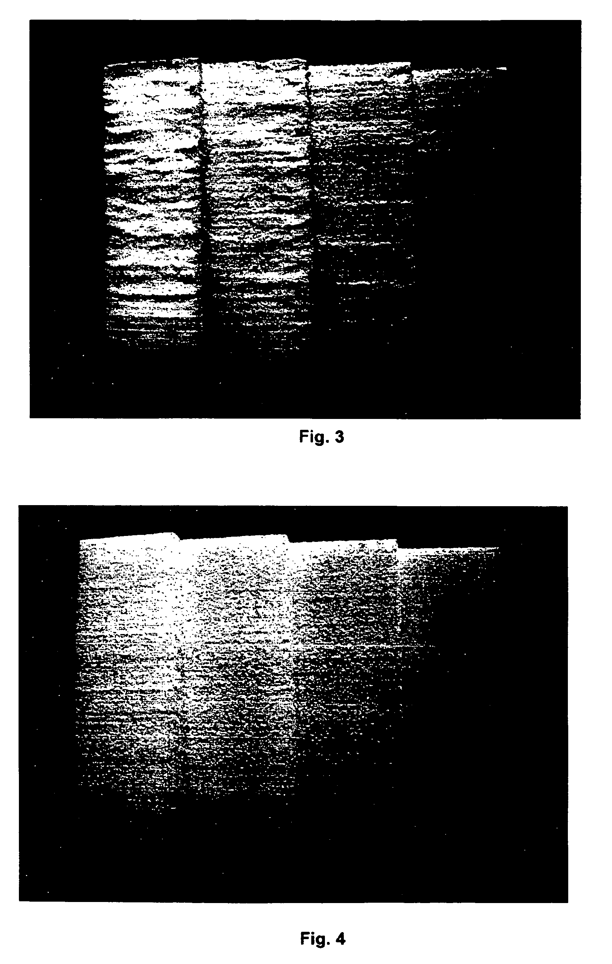

Fig. 3 zeigt ein lasergesintertes Bauteil, das mit 100% Polyamid Altpulver hergestellt wurde. Die Einfallsstellen sind deutlich zu sehen. Fig. 4 zeigt ein lasergesintertes Bauteil derselben Geometrie, bei dem das Pulver der oben beschriebenen Behandlung unterzogen wurde. Einfallsstellen sind nicht vorhanden.

Bei der Behandlung des Altpulvers bleibt der Schmelzpunkt bzw. Kristallisationspunkt des Pulvers etwa konstant, oder senkt sich leicht ab. In der Regel liegt die Absenkung bei 0-5°C. Schmelz- und Kristallisationspunkt des Pulvers können mittels Dynamische Differenzkalometrie (DKK bzw. DSC) gemäß DIN 53765 bestimmt werden.

Die Behandlung kann entweder vom Benutzer der Lasersintermaschine in der Vorrichtung 12 selbst vorgenommen werden oder von einer zentralen Stelle, die eine Vorrichtung 12 aufweist und Altpulver zum Recyceln entgegennimmt.

Das Verfahren ist nicht auf die Verwendung von Polyamid 12 beschränkt. Es können sowohl andere aliphatische Polyamide wie z.B. Polyamid 6, Polyamid 11, Polyamid 46, Polyamid 66, Polyamid 1010, Polyamid 1012, Polyamid 1212 sowie deren Copolymere und andere teilaromatische Polyamide wie z.B. Polyamid PA6T/6I, Poly-m-Xylylenadipinamid (PA MXD6), Polamid 6/6T, Polyamid PA6T/66, PA4T/46 verwendet werden. Prinzipiell lassen sich alle Polyamide verwenden, bei denen beim Lasersinterprozess in der Prozesskammer beim nichtverfestigten Pulver eine Erhöhung des Molekulargewichts durch Nachkondensation auftritt.

Das Verfahren ist auch anwendbar auf alle Kunststoffpulver, bei denen das nichtverfestigte Pulver in der Prozesskammer einem Alterungsprozess unterliegt, der zu einer Verschiebung des Verhältnisses aus Carboxylendgruppen und Aminoendgruppen führt.

Das Verfahren und die Vorrichtung sind auch nicht auf das Lasersinterverfahren bzw. die Lasersintervorrichtung beschränkt. Es ist im Prinzip anwendbar auf alle schichtweisen Verfahren zum Herstellen eines dreidimensionalen Objekts, bei denen in der Prozesskammer auf das nichtverfestigte Pulver Bedingungen (hohe Temperaturen) einwirken, die das Pulver altem lassen. Weitere Beispiele für diese Verfahren sind das Maskensintern und das Elektronenstrahlsintern.

Das Verfahren ist nicht darauf beschränkt, daß die Behandlung nur mit Wasser oder Wasserdampf stattfindet. Ebenso ist es möglich, daß bei der Behandlung zusätzlich Additive wie bspw. Kondensations-Katalysatoren oder amidbildende Kettenregler zugesetzt werden können. Solche Katalysatoren und Regler sind dem Fachmann bekannt.

## Patentansprüche

1. Verfahren zum Herstellen eines dreidimensionalen Objekts durch selektives Verfestigen von Schichten eines pulverförmigen Materials (3a) an den dem Querschnitt des Objekts (3) in der jeweiligen Schicht entsprechenden Stellen mittels Einwirkung von elektromagnetischer Strahlung (7a), wobei als Pulver ein Kunststoffpulver verwendet wird,
**dadurch gekennzeichnet, dass**
nichtverfestigtes Pulver (3a') nach dem Herstellen des Objekts einer Behandlung mit Wasser oder Wasserdampf unterzogen wird, anschließend getrocknet wird und anschließend zum Aufbau eines neuen Objekts weiterverwendet wird.

2. Verfahren nach Anspruch 1, **dadurch gekennzeichnet, dass** als Pulver Polyamid verwendet wird.

3. Verfahren nach Anspruch 1 oder 2, **dadurch gekennzeichnet, dass** die Behandlung bei einer Temperatur unterhalb des Schmelzpunkts des Pulvers durchgeführt wird.

4. Verfahren nach einem der Ansprüche 1 bis 3, **dadurch gekennzeichnet, dass** die Dauer der Behandlung in Abhängigkeit vom Alter des Pulvers gewählt wird.

5. Verfahren nach einem der Ansprüche 1 bis 4, **dadurch gekennzeichnet, dass** als Pulver Polyamid 12 verwendet wird und die Behandlung mit Heißdampf bei einer Temperatur von etwa 130°C bis etwa 170°C, vorzugsweise 130°C bis etwa 150°C erfolgt.

6. Verfahren nach einem der Ansprüche 1 bis 5, **dadurch gekennzeichnet, dass** das Pulver Zusatzstoffe wie z.B. Rieselhilfen, Füllstoffe, Farbpigmente oder Flammschutzmittel enthält.

7. Verfahren nach einem der Ansprüche 1 bis 6, **dadurch gekennzeichnet, dass** als elektromagnetische Strahlung Laserstrahlung (7a) verwendet wird.

8. Vorrichtung zum Herstellen eines dreidimensionalen Objekts durch selektives Verfestigen von Schichten eines pulverförmigen Materials (3a) an den dem Querschnitt des Objekts (3) in der jeweiligen Schicht entsprechenden Stellen mittels Einwirkung von elektromagnetischer Strahlung (7a),
mit einer Strahlungsquelle (7) für die elektromagnetische Strahlung,
einem Bauraum (10) mit einem Träger (2), auf dem das Objekt (3) aufgebaut wird, und
einer Beschichtungseinrichtung (5) zum Aufbringen von Schichten des pulverförmigen Materials auf den Träger oder eine zuvor verfestigte Schicht,
**gekennzeichnet durch** eine Vorrichtung zur Behandlung (12) von nichtverfestigtem Pulver nach dem Herstellen des Objekts mit Wasser oder Wasserdampf, wobei die Vorrichtung eine Trocknungseinrichtung zum Trocknen des behandelten Pulvers umfasst.

9. Vorrichtung nach Anspruch 8, **dadurch gekennzeichnet, dass** die Vorrichtung zur Behandlung (12) einen separaten Behälter umfasst.

10. Vorrichtung nach Anspruch 8 oder 9, **dadurch gekennzeichnet, dass** ein Vorratsbehälter (6) für das pulverförmige Material vorgesehen ist und dass die Vorrichtung zur Behandlung in oder an dem Vorratsbehälter vorgesehen ist.

11. Vorrichtung nach Anspruch 10, **dadurch gekennzeichnet, dass** eine Rückführeinrichtung zum Rückführen des nichtverfestigten Pulvers aus dem Bauraum in den Vorratsbehälter vorgesehen ist.

12. Verfahren zur Behandlung von pulverförmigem Kunststoffmaterial mit den Schritten:
Verwenden von pulverförmigem Kunststoffmaterial (3a'), das in einem Verfahren zum Herstellen eines dreidimensionalen Objekts durch selektives Verfestigen von Schichten eines pulverförmigen Materials an den dem Querschnitt des Objekts in der jeweiligen Schicht entsprechenden Stellen mittels Einwirkung von elektromagnetischer Strahlung nach dem Herstellen des Objekts nichtverfestigt wurde,
Behandeln des nichtverfestigten Pulvers (3a') mit Wasser oder
Wasserdampf,
Trocknen des behandelten Pulvers,
Bereitstellen des behandelten Pulvers zum Herstellen eines neuen dreidimensionalen Objekts.

13. Verfahren nach Anspruch 12, wobei das Kunststoffpulver Polyamid umfasst.

14. Pulverförmiges Polyamid zur Verwendung in einem Verfahren zum Herstellen eines dreidimensionalen Objekts durch selektives Verfestigen von Schichten des pulverförmigen Polyamids (3a) an den dem Querschnitt des Objekts in der jeweiligen Schicht entsprechenden Stellen mittels Einwirkung von elektromagnetischer Strahlung (7a), wobei das Pulver erhalten wird durch:
Behandeln von nichtverfestigtem pulverförmigen Polyamids (3a') nach dem Herstellen des Objekts mit Wasser oder Wasserdampf und anschließendem Trocknen des Polyamids.

15. Pulverförmiges Polyamid nach Anspruch 14, wobei das nichtverfestigte pulverförmige Polyamid ein Molekulargewicht von Mn (Zahlenmittel) von größer als etwa 20.000g/mol vorzugsweise 21.000-100.000g/mol, besonders bevorzugt 22.000-50.000 und ganz besonders bevorzugt 25.000-35.000 und ein Mw (Gewichtsmittel) von größer als etwa 40.000g/mol, vorzugsweise 45.000-200.000 besonders bevorzugt 50.000-150.000 und ganz besonders bevorzugt 60.000-100.000 aufweist.

16. Pulverförmiges Polyamid nach Anspruch 14 oder 15, wobei das nichtverfestigte pulverförmige Polyamid einen Überschuss der Carboxylendgruppen zu den Aminoendgruppen von mindestens 4:1 bis höchstens 200:1 aufweist.

17. Pulverförmiges Polyamid nach einem der Ansprüche 14 bis 16, wobei das nichtverfestigte pulverförmige Polyamid nach der Behandlung ein Molekulargewicht aufweist das um mindestens 5%, vorzugsweise 10-70% und besonders bevorzugt 20-50% unter dem des Altpulvers liegt.

18. Pulverförmiges Polyamid nach einem der Ansprüche 14 bis 17, wobei das nichtverfestigte pulverförmige Polyamid nach der Behandlung ein Molekulargewicht Mₙ (Zahlenmittel) von kleiner als etwa 40.000g/mol, vorzugsweise 15.000-30.000g/mol, besonders bevorzugt 17.000-25.000 und ganz besonders bevorzugt 19.000-21.000 und M_{w} (Gewichtsmittel) von kleiner als etwa 100.000g/mol, vorzugsweise 35.000-70.000 besonders bevorzugt 37.000-50.000 und ganz besonders bevorzugt 38.000-45.000 aufweist.

19. Pulverförmiges Polyamid nach Anspruch 17 oder 18, wobei das nichtverfestigte pulverförmige Polyamid nach der Behandlung einen Überschuss der Carboxylendgruppen zu den Aminoendgruppen von etwa 2:1 bis etwa 3:1 aufweist.

## Claims

1. Method of manufacturing a three-dimensional object by selectively solidifying of layers of a powdery material (3a) at locations corresponding to the cross-section of the object (3) in the respective layer by impact of electromagnetic radiation (7a), wherein a plastic powder is used as powder,
**characterized in that**
non-solidified powder (3a') is subjected to a treatment with water or water vapour after manufacturing the object, thereafter dried and thereafter used again to build-up a new object.

2. Method according to claim 1, **characterized in that** polyamide is used as powder.

3. Method according to claim 1 or 2, **characterized in that** the treatment is performed at a temperature below the melting point of the powder.

4. Method according to any one of claims 1 to 3, **characterized in that** the time of the treatment is selected in accordance to the age of the powder.

5. Method according to any one of claims 1 to 4, **characterized in that** polyamide 12 is used as powder, and the treatment is carried out with hot vapour at a temperature of about 130°C up to about 170°C, and preferably of 130°C up to a about 150°C.

6. Method according to any one of claims 1 to 5, **characterized in that** the powder includes additives such as ripple additives, fillers, pigments or flame resistants.

7. Method according to any one of claims 1 to 6, **characterized in that** laser radiation (7a) is used as electromagnetic radiation.

8. Device for manufacturing.a three-dimensional object by selectively solidifying layers of a powdery material (3a) at locations corresponding to the cross-section of the object (3) in the respective layer by impact of electromagnetic radiation (7a),
comprising a radiation source (7) for the electromagnetic radiation,
a building space (10) having a platform (2) whereon the object (3) is built-up, and
a dispenser (5) to apply layers of the powdery material onto the platform or onto a previously solidified layer,
**characterized by** a device for treatment (12) of non-solidified powder by water or water vapour after manufacturing the object, wherein the device comprises drying means for drying the treated powder.

9. Device according to claim 8, **characterized in that** the device for treatment (12) comprises a separate container.

10. Device according to claim 8 or 9, **characterized in that** the storage container (6) is provided for the powdery material and the device for treatment is provided in or at the storage container.

11. Device according to claim 10, **characterized in that** a return means for returning the non-solidified powder from the building space into the storage container is provided.

12. Method of treating powdery plastic material, comprising the steps of:
using a powdery plastic material (3a') which has not been solidified in a method of manufacturing a three-dimensional object by selectively solidifying layers of a powdery material at the locations corresponding to the cross-section of the object in the respective layer by impact of electromagnetic radiation after manufacturing the object,
treating the non-solidified powder (3a') by water or water vapour,
drying the treated powder,
providing the treated powder for manufacturing a new three-dimensional object.

13. Method according to claim 12, wherein the plastic powder contains polyamide.

14. Powdery polyamide for use in a method of manufacturing a three-dimensional object by selectively solidifying layers of the powdery polyamide (3a) at the locations corresponding to the cross-sections of the object in the respective layer by impact of electromagnetic radiation (7a), wherein the powder is obtained by:
treating non-solidified powdery polyamide (3a') by water or water vapour after manufacturing the object and subsequently drying the polyamide.

15. Powder polyamide according to claim 14, wherein the non-solidified powdery polyamide has a molar weight Mn (numeric average) of more than about 20.000 g/mol, preferably of 21.000 - 100.000 g/mol, further preferred of 22.000 -
50.000 and most preferred of 25.000 - 35.000, and a Mw (weight average) of more than about 40.000 g/mol, preferably of 45.000 - 200.000, further preferred of 50.000 - 150.000 and most preferred of 60.000 - 100.000.

16. Powdery polyamide according to claim 14 or 15, wherein the non-solidified powdery polyamide has an access of the carboxylic end groups relative to the amino end groups of at least 4:1 up to at most 200:1.

17. Powdery polyamide according to any one of claims 14 to 16, wherein the non-solidified powdery polyamide has a molar weight after the treatment, which is at least 5%, preferably 10 - 70% and further preferred 20 - 50% below the molar weight of the waste powder.

18. Powder polyamide according to any one of claims 14 to 17, wherein the non-solidified powder polyamide has a molar weight Mn (numeric average) after the treatment of less than about 40.000 g/mol, preferably of 15.000 - 30.000 g/mol, further preferred of 17.000 - 25. 000 and most preferred of 19.000 - 21.000, and a Mw (weight average) of less than about 100.000 g/mol, preferably of 35.000 - 70.000, further preferred of 37.000 - 50.000 and most preferred of 38.000 - 45.000.

19. Powdery polyamide according to claim 17 or 18, wherein the non-solidified powdery polyamide has an access of the carboxylic end groups relative to the amino end groups after the treatment of about 2:1 up to about 3:1.

## Revendications

1. Procédé de fabrication d'un objet en trois dimensions par consolidation sélective de couches d'un matériau en poudre (3a) aux endroits correspondant à la section transversale de l'objet (3) dans la couche respective sous l'effet d'un rayonnement électromagnétique (7a), dans lequel on utilise comme poudre une poudre de matière plastique,
**caractérisé en ce que**
la poudre (3a') non consolidée après fabrication de l'objet est soumise à un traitement à l'eau ou à la vapeur d'eau, est ensuite séchée et ensuite réutilisée pour construire un nouvel objet.

2. Procédé selon la revendication 1, **caractérisé en ce que** l'on utilise comme poudre du polyamide.

3. Procédé selon la revendication 1 ou 2, **caractérisé en ce que** le traitement est effectué à une température au-dessous du point de fusion de la poudre.

4. Procédé selon l'une quelconque des revendications 1 à 3, **caractérisé en ce que** la durée du traitement est choisie en fonction de l'âge de la poudre.

5. Procédé selon l'une quelconque des revendications 1 à 4, **caractérisé en ce que** l'on utilise comme poudre du polyamide 12 et le traitement à la vapeur chaude est effectué à une température d'environ 130 °C à environ 170 °C, de préférence de 130 °C à environ 150 °C.

6. Procédé selon l'une quelconque des revendications 1 à 5, **caractérisé en ce que** la poudre contient des additifs, comme par exemple des agents de ruissellement, des matières de remplissages, des pigments colorés ou des produits d'apprêt ignifuges.

7. Procédé selon l'une quelconque des revendications 1 à 6, **caractérisé en ce qu'**un rayonnement laser (7a) est utilisé comme rayonnement électromagnétique.

8. Dispositif de fabrication d'un objet en trois dimensions par consolidation sélective de couches d'un matériau en poudre (3a) aux endroits correspondant à la section transversale de l'objet (3) dans la couche respective sous l'effet d'un rayonnement électromagnétique (7a),
comprenant une source de rayonnement (7) pour le rayonnement électromagnétique,
un espace de construction (10) avec un support (2) sur lequel est construit l'objet (3), et
une installation à enduire (5) pour appliquer des couches du matériau en poudre sur le support ou une couche préalablement consolidée,
**caractérisé par** un dispositif de traitement (12) de la poudre non consolidée après fabrication de l'objet, à l'eau ou à la vapeur d'eau, dans lequel le dispositif comprend une installation de séchage pour sécher la poudre traitée.

9. Dispositif selon la revendication 8, **caractérisé en ce que** le dispositif de traitement (12) comprend un récipient séparé.

10. Dispositif selon la revendication 8 ou 9, **caractérisé en ce qu'**un récipient de stockage (6) est prévu pour le matériau en poudre, et **en ce que** le dispositif de traitement est prévu dans ou sur le récipient de stockage.

11. Dispositif selon la revendication 10, **caractérisé en ce qu'**un dispositif de recyclage est prévu pour recycler la poudre non consolidée de l'espace de construction vers le récipient de stockage.

12. Procédé de traitement d'une matière plastique en poudre, comprenant les étapes consistant à :
utiliser une matière plastique en poudre (3a') qui, au cours d'un procédé de fabrication d'un objet en trois dimensions par une consolidation sélective de couches d'un matériau en poudre aux endroits correspondant à la section transversale de l'objet dans la couche respective sous l'effet d'un rayonnement électromagnétique, n'a pas été consolidée après la fabrication de l'objet,
traiter la poudre (3a') non consolidée à l'eau ou à la vapeur d'eau,
sécher la poudre traitée,
fournir la poudre traitée pour fabriquer un nouvel objet en trois dimensions.

13. Procédé selon la revendication 12, dans lequel la poudre de matière plastique comprend du polyamide.

14. Polyamide en poudre pour une utilisation dans un procédé de fabrication d'un objet en trois dimensions par une consolidation sélective de couches du polyamide en poudre (3a) aux endroits correspondant à la section transversale de l'objet dans la couche respective sous l'effet d'un rayonnement électromagnétique (7a), dans lequel la poudre est obtenue par l'étape consistant à:
traiter le polyamide en poudre (3a') non consolidé après la fabrication de l'objet, à l'eau ou à la vapeur d'eau, et sécher ensuite le polyamide.

15. Polyamide en poudre selon la revendication 14, dans lequel le polyamide en poudre non consolidé présente un poids moléculaire de Mn (moyenne numérique) de plus d'environ 20 000 g/mol, de préférence de 21 000 à 100 000 g/mol, de plus grande préférence de 22 000 à 50 000, et de la plus grande préférence de 25 000 à 35 000, et une Mw (moyenne en poids) de plus d'environ 40 000 g/mol, de préférence de 45 000 à 200 000, de plus grande préférence de 50 000 à 150 000, et de la plus grande préférence de 60 000 à 100 000.

16. Polyamide en poudre selon la revendication 14 ou 15, dans lequel le polyamide en poudre non consolidé présente un excès de groupes terminaux carboxyles par rapport aux groupes terminaux amines d'au moins 4:1 jusqu'à 200:1 au maximum.

17. Polyamide en poudre selon l'une quelconque des revendications 14 à 16, dans lequel le polyamide en poudre non consolidé présente après le traitement un poids moléculaire qui se situe au moins de 5 %, de préférence de 10 à 70 %, et de plus grande préférence de 20 à 50 % au-dessous de celui de la poudre usagée.

18. Polyamide en poudre selon l'une quelconque des revendications 14 à 17, dans lequel le polyamide en poudre non consolidé présente après le traitement un poids moléculaire Mₙ (moyenne numérique) de moins d'environ 40 000 g/mol, de préférence de 15 000 à 30 000 g/mol, de plus grande préférence de 17 000 à 25 000, et de la plus grande préférence de 19 000 à 21 000, et une M_{w} (moyenne en poids) de moins d'environ 100 000 g/mol, de préférence de 35 000 à 70 000, de plus grande préférence de 37 000 à 50 000, et de la plus grande préférence de 38 000 à 45 000.

19. Polyamide en poudre selon la revendication 17 ou 18, dans lequel le polyamide en poudre non consolidé présente après le traitement un excès de groupes terminaux carboxyles par rapport aux groupes terminaux amines d'environ 2:1 à environ 3:1.
